# EUROPÄISCHE PATENTSCHRIFT

(11) **EP 3 336 631 B1**
(45) Veröffentlichungstag und Bekanntmachung des Hinweises auf die Patenterteilung: **16.06.2021**
(21) Anmeldenummer: 16204636.1
(22) Anmeldetag: 16.12.2016
(51) Int. Cl.: G05B 19/418

(54) **PROZESSLEITSYSTEM SOWIE ANLAGENPLANUNGS-WERKZEUG**
PROCESS CONTROL SYSTEM AND SYSTEM PLANNING TOOL
SYSTÈME D'ORGANISATION DE PROCÉDURE ET OUTIL DE PLANIFICATION D'INSTALLATIONS

(43) Veröffentlichungstag der Anmeldung: 20.06.2018
(73) Patentinhaber: Siemens Aktiengesellschaft, 80333 München (DE)
(72) Erfinder: Drumm, Oliver, 76344 Eggenstein-Leopoldshafen (DE); Lutz, Benjamin, 76327 Pfinztal (DE); Wolf, Gerrit, 76187 Karlsruhe (DE)

(56) Entgegenhaltungen:
- WO-A1-2004/042482
- Anonymous: "Prozessleitsystem SIMATIC PCS 7 Systemkomponenten, Ausgabe 2016", Siemens , 15. August 2016 (2016-08-15), Seiten 4/1-4/18, 8/1-8/41, XP002770927, Gefunden im Internet: URL:https://www.automation.siemens.com/w2/ efiles/pcs7/pdf/00/KG_STPCS7_2016_de_Web.p df [gefunden am 2017-06-09]

## Beschreibung

Die Erfindung betrifft ein Prozessleitsystem mit den im Patentanspruch 1 angegebenen Maßnahmen. Darüber hinaus betrifft die Erfindung ein für ein derartiges Prozessleitsystem geeignetes Anlagenplanungs-Werkzeug.

Aus dem Siemens-Katalog "ST PCS7", Kapitel 4, Ausgabe 2016 ist ein Engineering-System bekannt, welches für eine Projektierung bzw. für ein Engineering von Automatisierungskomponenten einer Anlage, z. B. Komponenten in Form von Netz-, Kommunikation- und Hardware-Komponenten sowie in Form von Steuerprogrammen (Automatisierung), vorgesehen ist. Derartige Hardware-Komponenten sind z. B. Automatisierungsgeräte bzw. speicherprogrammierbare Steuerungen (SPS, PLC) sowie Feldgeräte, die über einen Bus an eine Steuerung angeschlossen sind.

Aus dem Siemens-Katalog "ST PCS 7 T", Kapitel 8, Ausgabe 2016 ist ein Simulations-Werkzeug offenbart, welches eine Echtzeitsimulation von Automatisierungslösungen ermöglicht. Dieses Simulations-Werkzeug umfasst ein Simulations-Framework, welche das Prozessverhalten der Feldgeräteebene simuliert, und eine Simulations-Einheit, die das Kommunikationsverhalten der realen Feldgeräte simuliert, wobei ferner diese Simulations-Einheit das modellierte Prozessverhalten an die Steuerung anbindet.

Darüber hinaus ist aus dem Siemens-Dokument "Schnelle und einfache Erstellung von Rohrleitungs- und Instrumentierungsschema mit COMOS P&ID am praktischen Beispiel, COMOS V10.1, Anwendungsbeispiel 07/2016" ein weiteres Software-Werkzeug zur Erstellung eines Rohrleitungs- und Instrumentierungsdiagramms (R&I-Fließschema, Rohrleitungs- und Instrumentenfleißschema) für eine zu steuernde technische Anlage bekannt. Dieses Software-Werkzeug ist Bestandteil eines Anlagenplanungs-Werkzeugs, welches zur verfahrenstechnischen Anlagenplanung vorgesehen ist.

In der WO 2004/042482 A1 ist ein Verfahren zur Offline-Parametrierung eines Feldgeräts der Prozessautomatisierungstechnik offenbart. Dabei wird ein Simulationsverfahren zur Simulation des Prozessverhaltens des Feldgeräts eingesetzt.

Das Anlagenplanungs-Werkzeug einerseits und das Simulations-Werkzeug, insbesondere die Simulations-Einheit dieses Simulations-Werkzeugs, andererseits stehen beim Stand der Technik in keiner Wechselwirkung, was bedeutet, dass das Engineering der Simulation von dem Engineering des verfahrenstechnischen Anlagenplanungsprozesses losgelöst ist, was sich nachteilig auf die Inbetriebnahme der verfahrenstechnischen Anlage auswirkt.

Der Erfindung liegt daher die Aufgabe zugrunde ein Prozessleitsystem zu schaffen, die für eine Inbetriebnahme von feldnahen Komponenten geeignet ist. Ferner ist ein für ein derartiges Prozessleitsystem geeignetes Anlagenplanungs-Werkzeug anzugeben.

Diese Aufgabe wird im Hinblick auf das Prozessleitsystem durch die im Anspruchs 1, bezüglich des Anlagenplanungs-Werkzeugs durch die im Anspruch 5 angegebenen Maßnahmen gelöst.

Vorteilhaft ist, dass durch eine derartige Verknüpfung oder "Verlinkung" eine stufenweise und sichere Inbetriebnahme einer verfahrenstechnischen Anlage ermöglicht wird, wobei die Inbetriebnahme mit virtuellen Anlagenkomponenten Bestandteil der Anlagenplanung ist. Mittels des Anlagenplanungswerkzeugs kann der Zustand der Inbetriebnahme nachvollzogen werden, wobei jederzeit nachvollziehbar ist, welche verfahrenstechnischen Anlagenkomponenten noch virtualisiert sind und welche bereits real an die Steuerungen angebunden sind. Darüber hinaus wird ein durchgängiges Engineering der verfahrenstechnischen Anlage inklusive der Berücksichtigung von Simulationsaspekten ermöglicht.

Mittels der im Anspruch 2 angegebenen Maßnahmen kann ein Anwender eine Verknüpfung einfach bewerkstelligen

In einer weiteren Ausgestaltung der Erfindung ist vorgesehen, dass die zumindest eine Simulations-Einheit dazu ausgebildet ist, während der Inbetriebnahme ihren Zustand und/oder den Zustand der virtuellen Feldgeräte dem Anlagenplanungs-Werkzeug zu übermitteln, wodurch der aktuelle Zustand der Simulations-Einheit - wie auch die Ergebnisse der Inbetriebnahme - wieder ins Anlagenplanungs-Werkzeug zurückgelesen werden können.

Dadurch, dass das Anlagenplanungs-Werkzeug dazu ausgebildet ist, den Zustand im Rohrleitungs- und Instrumentierungsdiagramm und/oder diesen Zustand in einer Gerätehierarchieübersicht anzuzeigen, kann der Anwender erkennen, welche virtuellen Feldgeräte bzw. PLT-Stellen während der Inbetriebnahme störungsfrei und welche fehlerhaft bzw. überlastet sind.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen in einer vereinfachten Form
- Figur 1: Bestandteile eines Prozessleitsystems,
- Figur 2 und 5: Rohrleitungs- und Instrumentierungsdiagramme und,
- Figur 3 und 4: Gerätehierarchieübersichten.

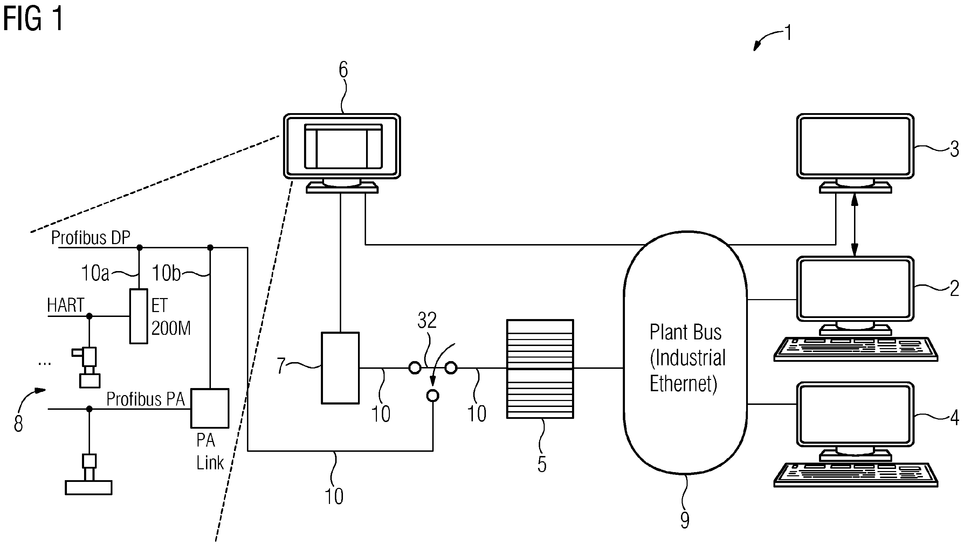

Die in den Figuren 1 bis 5 dargestellten gleichen Teile sind mit gleichen Bezugszeichen versehen.

In Figur 1 sind mit 1 Bestandteile eines Prozessleitsystems bezeichnet, welches im vorliegenden Ausführungsbeispiel ein Engineering-System 2, ein Anlagenplanungs-Werkzeug 3, eine Operator-Station 4, eine Steuerung bzw. Automatisierungsgerät 5, ein Simulations-Werkzeug 6, 7 sowie eine Feldgeräteebene 8 umfasst. Das Prozessleitsystem 1 kann selbstverständlich eine Vielzahl von Steuerungen 5 aufweisen, die einerseits über einen Plant Bus 9 mit dem Engineering-System 2, dem Anlagenplanungs-Werkzeug 3 sowie der Operator-Station 4 und andererseits über einen weiteren Bus 10, z. B. den so genannten PROFIBUS DP, mit der Feldgerätebene 8 verbunden sind. Die Feldgerätebene 8 weist eine Vielzahl von Feldgeräten auf, wobei an so genannten "Dezentralen Peripherien" und/oder Buskopplern dieser Feldgeräteebene 8 Aktuatoren und Sensoren angeschlossen sind. Welche und wie viele der Steuerungen und Feldgeräte sowie welche weiteren Automatisierungskomponenten zum Steuern einer Anlage eingesetzt werden, ist abhängig von der zu lösenden Automatisierungsaufgabe, wobei ein Anwender mittels des mit einer geeigneten Software versehenen Engineering-Systems 2 ein Steuerprogramm für die Steuerung 5 erstellt und die Automatisierungskomponenten entsprechend projektiert bzw. "engineert".

Das Simulations-Werkzeug 6, 7 umfasst ein Simulations-Framework 6 und mindestens eine Simulations-Einheit 7, wobei ein Anwender mittels des Simulations-Frameworks 6 zumindest ein Modell erstellt, welches das Prozessverhalten der Feldgeräteebene 8 virtualisiert bzw. simuliert (in der Zeichnung durch gestrichelte Linien angedeutet). Die Simulations-Einheit 7 ist dazu ausgebildet, das Kommunikationsverhalten der realen Feldgeräte der Feldebene 8 zu virtualisieren bzw. zu simulieren und darüber hinaus dazu ausgebildet, das durch das Simulations-Framework 6 erstellte Prozessmodell über den Bus 10 an die Steuerung 5 anzubinden. In dieser Betriebsart "Virtualisierung" ist die Simulations-Einheit 7 mit der Steuerung 5 verbunden und die reale Feldebene von der Steuerung 5 getrennt, was in der Zeichnung durch einen Schalter 32 angedeutet ist. Im vorliegenden Ausführungsbeispiel ist lediglich eine Simulations-Einheit 7 für die Feldgeräteebene 8 vorgesehen. Selbstverständlich kann für jeden Strang 10a, 10b des Busses 10 eine Simulations-Einheit eingesetzt werden, wobei ein Anwender mittels des Engineering-Systems 2 oder mittels des Anlagenplanungs-Werkzeugs 3 die Anzahl der Simulations-Einheiten projektiert. Das Engineering-System 2 übermittelt jeder Simulations-Einheit sowie dem Simulations-Framework 6 und dem Anlagenplanungs-Werkzeugs 3 die Adressen der Feldgeräte, die z. B. in so genannten Gerätebeschreibungs-Dateien der Feldgeräte hinterlegt sind, wobei diese Dateien vom Engineering-System 2 ausgelesen und in diesem abgespeichert werden.

Mittels des zur verfahrenstechnischen Anlagenplanung vorgesehenen Anlagenplanungs-Werkzeugs 3 erstellt der Anwender ein Rohrleitungs- und Instrumentierungsdiagramm (R&I-Fließschema, Rohrleitungs- und Instrumentenfleißschema) für die zu projektierende technische Anlage. Das Anlagenplanungs-Werkzeug 3 weist eine Klasse "Simulations-Einheit" auf, aus welchen Instanzen "Simulations-Einheit 1, Simulations-Einheit 2, ..." gebildet bzw. angelegt werden können. Für den Fall, dass z. B. zwei Simulations-Einheiten zu projektieren sind, erzeugt das Anlagenplanungs-Werkzeug 3 aus der Klasse "Simulations-Einheit" eine erste und eine zweite Instanz - z. B. die Instanzen "Simulations-Einheit 1" und "Simulations-Einheit 2".

Die Zuordnung der Feldgeräte zu einer der Instanzen erfolgt in der Art und Weise, dass ein Anwender zunächst mittels einer geeigneten Bedieneingabe ein Symbol bzw. ein Bildobjekt eines der Feldgeräte im Rohrleitungs- und Instrumentierungsdiagramm kennzeichnet und - z. B. durch eine weitere Eingabe - der Instanz zuordnet. Dadurch verknüpft das Anlagenplanungs-Werkzeug 3 automatisch die Adresse des Feldgerätes, das durch das Symbol repräsentiert wird, mit der Simulations-Einheit, die durch die eine Instanz repräsentiert wird. Dies bedeutet, dass die Simulations-Einheit in das Anlagenplanungs-Werkzeug 3 "integriert" ist und es dadurch ermöglicht wird, bereits in der verfahrenstechnischen Planung eine entsprechende Virtualisierung mit zu berücksichtigen und im weiteren Planungsverlauf auch (dynamisch) zu ändern und zu pflegen.

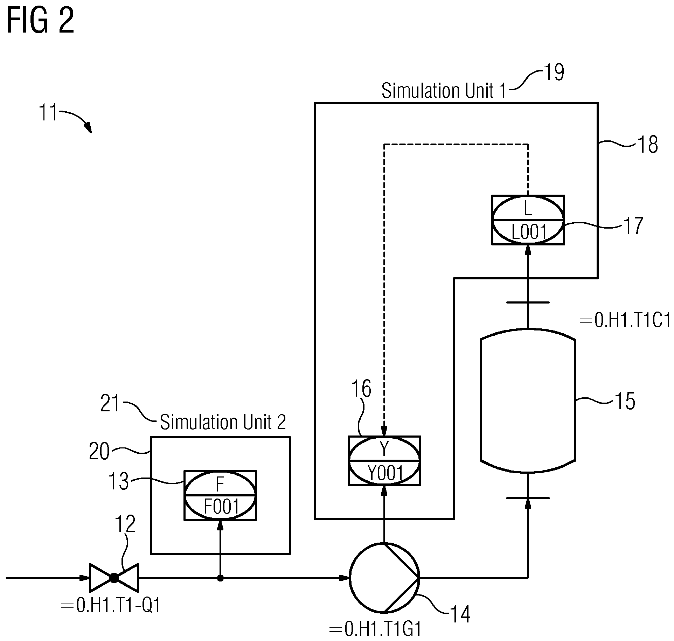

Im Folgenden wird auf Figur 2 verwiesen, in welcher ein Rohrleitungs- und Instrumentierungsdiagramm 11 dargestellt ist, welches ein Anwender mittels des Anlagenplanungs-Werkzeugs 3 erstellt hat. Dieses Diagramm weist Symbole 12 bis 17 auf, welche Feldgeräte bzw. PLT (Prozessleittechnik)-Stellen einer Feldgeräteebene repräsentieren. Im vorliegenden Ausführungsbeispiel sind die Symbole 16, 17 durch eine Umrandung 18 gekennzeichnet bzw. markiert, wobei diese Symbole 16, 17 bzw. diese Umrandung 18 einer ersten Simulations-Einheit-Instanz 19 zugewiesen sind, welche eine an den Bus 10 (Figur 1) anschließbare reale erste Simulations-Einheit repräsentiert. Darüber hinaus ist einer zweiten Simulations-Einheit-Instanz 21, welche eine ebenfalls an den Bus 10 (Figur 1) anschließbare reale zweite Simulations-Einheit repräsentiert, das Symbol 13 bzw. eine Umrandung 20 zugewiesen.

Damit der Anwender eindeutig die getroffenen Zuordnungen der Feldgeräte bzw. PLT-Stellen zu den Simulations-Einheiten erkennen kann, erstellt das Anlagenplanungs-Werkzeug Gerätehierarchieübersichten. Diese Übersichten zeigen dem Anwender - ohne das Rohrleitungs- und Instrumentierungsdiagramm öffnen zu müssen - die simulierten und realen PLT-Stellen und deren Zuordnungen zu den Simulations-Einheiten an.

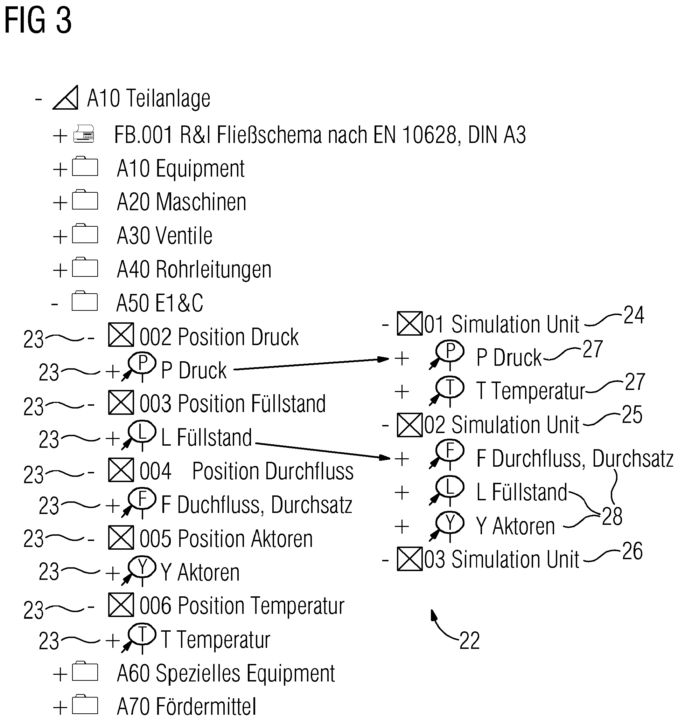

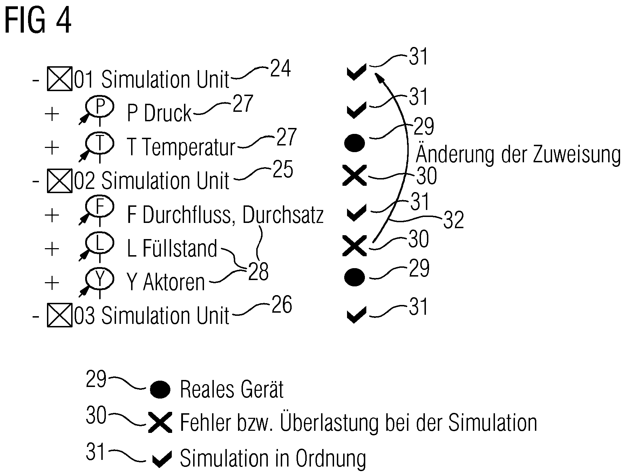

Zur näheren Erläuterung wird dazu auf die Figuren 3 und 4 verwiesen, in der veranschaulicht ist, welche verfahrenstechnischen Anlagenteile durch welche Simulations-Einheiten virtualisiert werden.

Figur 3 zeigt beispielhaft eine Gerätehierarchie-Übersicht 22 einer Teilanlage, wobei in dieser Übersicht 22 Bezeichnungen und Beschriftungen dargestellt sind, die reale und virtuelle Feldgeräte bzw. PLT-Stellen sowie Simulations-Einheiten für diese Teilanlage repräsentieren. Der Einfachheit halber werden im Folgenden für die Begriffe "Bezeichnungen und Beschriftungen" die Begriffe verwendet, die von diesen "Bezeichnungen und Beschriftungen" repräsentiert werden, also die Begriffe "reale Feldgeräte bzw. PLT-Stellen", "virtuelle Feldgeräte bzw. PLT-Stellen" und "Simulations-Einheiten".

Dem Anwender wird im vorliegenden Beispiel durch diese Gerätehierarchie-Übersicht 22 angezeigt, welche reale PLT-Stellen 23 und welche Simulations-Einheiten die Teilanlage umfasst und darüber hinaus, welche der realen PLT-Stellen 23 von welcher Simulations-Einheit 24, 25, 26 simuliert werden, wobei die in den Simulations-Einheiten 24 bis 26 aufgeführten PLT-Stellen als virtuelle PLT-Stellen ausgebildet sind, die jeweils eine reale PLT-Stelle repräsentieren. Beispielsweise weist die Simulations-Einheit 24 zwei virtuelle PLT-Stellen 27 auf, die den entsprechenden realen PLT-Stellen zugeordnet sind. Ferner ist die Simulations-Einheit 25 mit drei virtuellen PLT-Stellen 28 versehen, welche ebenfalls den dazu entsprechenden realen PLT-Stellen zugeordnet sind. Die weitere Simulations-Einheit 27 ist als Reserve-Simulations-Einheit vorgesehen, welcher noch keine PLT-Stellen zugeordnet sind.

Nach der Zuordnung und Zuweisung der Feldgeräte bzw. PLT-Stellen zu den Simulations-Einheiten, nach dem Laden des Steuerprogramms in die Steuerung 5 und der Installation bzw. dem Anschließen der Simulations-Einheiten an den Bus sowie nach dem Laden der Verhaltensmodelle können zur Laufzeit (Steuerung 5 im RUN-Betrieb) die feldnahen Komponenten (Feldgeräteebene, Feldgeräte, PLT-Stellen) virtuell in Betrieb genommen und getestet werden. Dabei virtualisieren die Simulations-Einheiten die Feldebene und das Prozessverhalten der feldnahen Komponenten wird durch das zumindest eine (Verhaltens-)Modell im Simulations-Framework 6 widerspiegelt. Der Anwender kann nach und nach die virtuellen Komponenten entsprechend eines Inbetriebsetzungsplanes in Betrieb nehmen und für den Fall, dass keine Störungen auftreten, nach und nach die virtuellen Komponenten durch die realen Komponenten ersetzen. Die Simulations-Einheiten sind derart ausgebildet, dem Anlagenplanungs-Werkzeug 3 zu melden, welche virtuellen Komponenten störungsfrei oder störbehaftet sind. Dies bedeutet, dass die Simulations-Einheiten diesem Anlagenplanungs-Werkzeug 3 stets ihre aktuellen Zustände bzw. ihre virtuellen Komponenten übermitteln bzw. rückmelden.

Für den Fall, dass während der Simulation eine Störung auftritt, z. B. aufgrund einer Überlastung oder einer Störung einer virtuellen Komponente einer Simulations-Einheit, kann der Anwender in der Gerätehierarchieübersicht 22 diese Komponente einer anderen Simulations-Einheit mittels einer geeigneten Bedieneingabe - z. B. mittels einer "Cut&Paste"- oder "Drag&Drop"-Eingabe - zuweisen. Dies bedeutet, dass die entsprechende Komponente auf die andere Simulations-Einheit verschoben wird, wobei das Anlagen-Planungs-Werkzeug 3 diese Änderung automatisch in das Rohrleitungs- und Instrumentierungsdiagramm übernimmt.

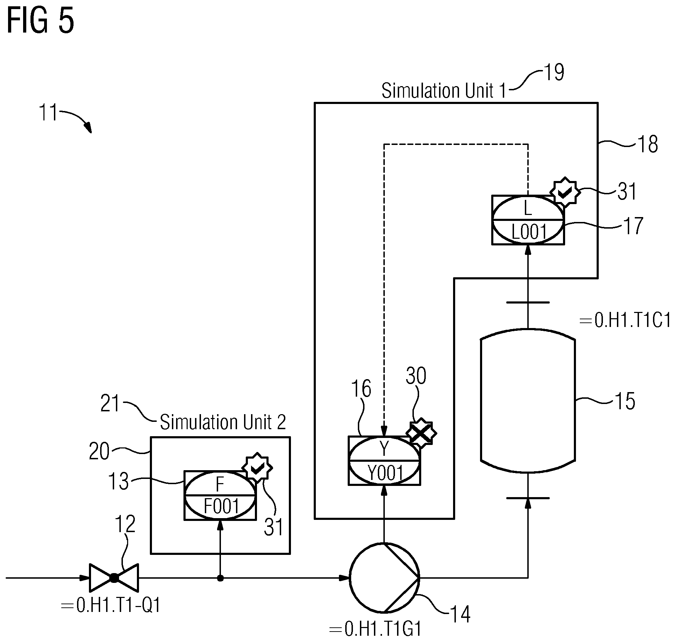

Zur näheren Erläuterung im Hinblick auf eine derartige Verschiebung wird im Folgenden auf die Figuren 4 und 5 verwiesen. Figur 4 zeigt einen Ausschnitt der Gerätehierarchieübersicht 22 (Figur 3), in welcher die Simulations-Einheiten 24, 25, 26 und die virtualisierten PLT-Stellen 27, 28 dargestellt sind. Dabei wird angenommen, dass während der Inbetriebnahme bereits zwei virtuelle PLT-Stellen durch entsprechende reale PLT-Stellen ersetzt wurden, was dem Anwender durch eine geeignete Markierung 29 angezeigt wird. Dem Anwender wird ferner durch eine weitere Markierung 30, 31 angezeigt, welche virtuellen PLT-Stellen während der Inbetriebnahme störungsfrei und welche fehlerhaft bzw. überlastet sind. Im vorliegenden Beispiel ist die virtuelle PLT-Stelle 28a der Simulations-Einheit 25 gestört. Um diese Störung zu beheben, verschiebt der Anwender diese PLT-Stelle 28 in die Simulations-Einheit 24, was in der Zeichnung mittels des Pfeils 32 angedeutet ist.

Um sowohl die störungsfreien als auch die fehlerbehafteten oder überlasteten virtuellen PLT-Stellen auch im Rohrleitungs- und Instrumentierungsdiagramm zu erkennen, bewerkstelligt das Anlagenplanungs-Werkzeug, dass diese in der Gerätehierarchieübersicht 22 angezeigten Zustände dem Diagramm rückgemeldet und angezeigt werden (Figur 5).

Wie beschrieben wird, können vom Anlagenplanungs-Werkzeug die virtuellen Komponenten für die Inbetriebnahme "ins Feld" gebracht werden und umgekehrt der aktuelle Zustand der Simulations-Einheiten - wie auch die Ergebnisse der Inbetriebnahme - wieder ins Anlagenplanungs-Werkzeug zurückgelesen werden. Dieser Prozess ist also bidirektional, wobei vorteilhaft ist, dass der Zustand der Inbetriebsetzung widergespiegelt wird. Es kann abgeleitet werden, wie der Inbetriebsetzungsprozess verläuft bzw. extrapoliert wird, wann die Inbetriebsetzung abgeschlossen sein wird. Auch die erlangten Erkenntnisse bei der Inbetriebsetzung können an diesen Objekten im Anlagenplanungs-Werkzeug dokumentiert werden. Diese Dokumentation kann dazu dienen, bei späteren Erweiterungen der Automatisierung diese an einer passenden Stelle einzufügen und nicht an Stellen, die schon in der Vergangenheit während der Inbetriebnahme überlastet waren.

## Patentansprüche

1. Prozessleitsystem mit
- einem Engineering-System (2)
- zum Projektieren von Automatisierungskomponenten (5, 8) für eine technische Anlage, wobei die Automatisierungskomponenten (5, 8) zumindest eine Steuerung (5) und mit dieser Steuerung (5) verbundene Feldgeräte (8) aufweist, denen Feldgeräteadressen zugewiesen sind, und
- zum Erstellen zumindest eines Steuerprogramms sowie zum Laden des Steuerprogramms in die Steuerung (5),
- einem Simulations-Framework (6) zur Modellierung des Prozessverhaltens der Feldgeräte (8),
- zumindest einer Simulations-Einheit (7) zur Virtualisierung des Kommunikationsverhaltens der realen Feldgeräte (8) und zur Anbindung des modellierten Prozessverhaltens an die zumindest eine Steuerung (5),
- einem Anlagenplanungs-Werkzeug (3) zum Projektieren der verfahrenstechnischen Komponenten der Anlage, wobei mittels des Anlagenplanungs-Werkzeugs (3) durch einen Anwender ein Rohrleitungs- und Instrumentierungsdiagramm (11), welches Symbole für die realen Feldgeräte (8) umfasst, erstellbar ist,
wobei das Engineering-System (2) dazu ausgebildet ist, dem Anlagenplanungs-Werkzeug (3) die Feldgeräteadressen zu übermitteln,
und wobei das Anlagenplanungs-Werkzeug (3) dazu ausgebildet ist, mindestens eines der Feldgeräte (8) mit der mindestens einen Simulations-Einheit (7) zu verknüpfen,
und wobei das Anlagenplanungs-Werkzeug (3) dazu ausgebildet ist, die Adresse des mindestens einen Feldgeräts (8) der mindestens einen Simulations-Einheit (7) zuzuordnen.

2. Prozessleitsystem nach Anspruch 1, **dadurch gekennzeichnet, dass** die Verknüpfung dadurch einleitbar ist, dass ein Anwender mittels einer Bedieneingabe ein Symbol (12 bis 17) oder Bildobjekt des mindestens einen Feldgerätes im Rohrleitungs- und Instrumentierungsdiagramm (11) markiert, wobei aufgrund der Markierung das Anlagenplanungs-Werkzeug (3) die Adresse des mindestens einen Feldgerätes der zumindest einen Simulations-Einheit zuordnet.

3. Prozessleitsystem nach Anspruch 1 oder 2, **dadurch gekennzeichnet, dass** die zumindest eine Simulations-Einheit (7) dazu ausgebildet ist, während der Inbetriebnahme ihren Zustand und/oder den Zustand der virtuellen Feldgeräte dem Anlagen-planungs-Werkzeug (3) zu übermitteln.

4. Prozessleitsystem nach Anspruch 3, **dadurch gekennzeichnet, dass** das Anlagenplanungs-Werkzeug (3) dazu ausgebildet ist, den Zustand im Rohrleitungs- und Instrumentierungsdiagramm (11) und/oder in einer Gerätehierarchieübersicht (22) anzuzeigen.

5. Ein für ein Prozessleitsystem nach einem der Ansprüche 1 bis 4 ausgebildetes und eingerichtetes Anlagenplanungs-Werkzeug (3) zum Projektieren der verfahrenstechnischen Komponenten der Anlage, wobei mittels des Anlagenplanungs-Werkzeugs (3) durch einen Anwender ein Rohrleitungs- und Instrumentierungsdiagramm (11), welches Symbole für die realen Feldgeräte (8) umfasst, erstellbar ist, wobei dem Anlagenplanungs-Werkzeug (3) die Feldgeräteadressen durch das Engineering-System (2) übermittelbar sind, und wobei das Anlagenplanungs-Werkzeug dazu ausgebildet ist, mindestens eines der Feldgeräte (8) mit der mindestens einen Simulations-Einheit (7) zu verknüpfen, und die Adresse des mindestens einen Feldgeräts (8) der mindestens einen Simulations-Einheit (7) zuzuordnen.

## Claims

1. Process control system with
- an engineering system (2)
- for planning automation components (5, 8) into a project for a technical plant, wherein the automation components (5, 8) have at least one controller (5) and field devices (8) connected to this controller (5), to which field device addresses are allocated, and
- for creating at least one control program as well as for loading the control program into the controller (5),
- a simulation framework (6) for modelling the process behaviour of the field devices (8),
- at least one simulation unit (7) for virtualisation of the communication behaviour of the real field devices (8) and for binding the modelled process behaviour to the at least one controller (5),
- a plant planning tool (3) for planning the process engineering components of the plant into the project, wherein a piping and instrumentation diagram (11), which comprises symbols for the real field devices (8), can be created by a user by means of the plant planning tool (3),
wherein the engineering system (2) is embodied to transfer the field device addresses to the plant planning tool (3),
and wherein the plant planning tool (3) is embodied to logically link at least one of the field devices (8) to the at least one simulation unit (7),
and wherein the plant planning tool (3) is embodied to assign the address of the at least one field device (8) to the at least one simulation unit (7).

2. Process control system according to claim 1, **characterised in that** the logical linkage can be initiated by a user marking, by means of a user input, a symbol (12 to 17) or an image object of the at least one field device in the piping and instrumentation diagram (11), wherein, as a result of the marking, the plant planning tool (3) assigns the address of the at least one field device to the at least one simulation unit.

3. Process control system according to claim 1 or 2, **characterised in that** the at least one simulation unit (7) is embodied to transfer its status and/or the status of the virtual field devices to the plant planning tool (3) during the commissioning.

4. Process control system according to claim 3, **characterised in that** the plant planning tool (3) is embodied to display the status in the piping and instrumentation diagram (11) and/or in a device hierarchy overview (22).

5. Plant planning tool (3) embodied and configured for a process control system according to one of claims 1 to 4, for planning the process engineering components of the plant into the project, wherein a piping and instrumentation diagram (11), which comprises symbols for the real field devices (8), can be created by a user by means of the plant planning tool (3), wherein it is possible for the engineering system (2) to transfer the field device addresses to the plant planning tool (3), and wherein the plant planning tool is embodied to logically link at least one of the field devices (8) to the at least one simulation unit (7), and to assign the address of the at least one field device (8) to the at least one simulation unit (7).

## Revendications

1. Système de conduite de processus comprenant
- un système (2) d'ingénierie
- pour l'établissement de projets de composants (5, 8) d'automatisation d'une installation technique, les composants (5, 8) d'automatisation comprenant au moins une commande (5) et des appareils (8) sur site, qui sont reliés à cette commande (5) et auxquels sont affectés des adresses d'appareils sur site, et
- pour l'établissement d'au moins un programme de commande, ainsi que pour la charge du programme de commande dans la commande (5),
- un framework (6) de simulation pour la modélisation du comportement en processus des appareils (8) sur site,
- au moins une unité (7) de simulation pour la virtualisation du comportement en communication des appareils (8) sur site réels et pour le rattachement du comportement en processus modélisé à la au moins une commande (5),
- un outil (3) de planification d'installation pour l'établissement de projets des composants techniques de procédé de l'installation, dans lequel, au moyen de l'outil (3) de planification d'installation, il peut être établi par un utilisateur un diagramme (11) de canalisation et d'instrumentation, qui comprend des symboles pour les appareils (8) sur site réels,
dans lequel le système (2) d'ingénierie est constitué pour transmettre les adresses d'appareils sur site à l'outil (3) de planification d'installation,
et dans lequel l'outil (3) de planification d'installation est constitué pour combiner au moins l'un des appareils (8) sur site à la au moins une unité (7) de simulation,
et dans lequel l'outil (3) de planification d'installation est constitué pour associer l'adresse du au moins un appareil (8) sur site à la au moins une unité (7) de simulation.

2. Système de conduite de processus suivant la revendication 1, **caractérisé en ce que** la combinaison peut être lancée par le fait qu'un utilisateur repère au moyen d'une entrée de commande un symbole (12 à 17) ou un objet-image du au moins un appareil sur site dans le diagramme (11) de canalisation et d'instrumentalisation, dans lequel, sur la base du repérage, l'outil (3) de planification d'installation associe l'adresse du au moins un appareil sur site à la au moins une unité de simulation.

3. Système de conduite de processus suivant la revendication 1 ou 2, **caractérisé en ce que** la au moins une unité (7) de simulation est constituée pour transmettre, pendant la mise en service, son état et/ou l'état des appareils sur site virtuels à l'outil (3) de planification d'installation.

4. Système de conduite de processus suivant la revendication 3, **caractérisé en ce que** l'outil (3) de planification d'installation est constitué pour afficher l'état dans le diagramme (11) de canalisation et d'instrumentalisation et/ou dans une vue (22) d'ensemble hiérarchique d'appareils.

5. Outil (3) de planification d'installation constitué et conçu suivant l'une des revendications 1 à 4, pour l'établissement de projets des composants techniques de procédé de l'installation, dans lequel, au moyen de l'outil (3) de planification d'installation, il peut être établi par un utilisateur un diagramme (11) de canalisation et d'instrumentalisation, qui comprend des symboles pour les appareils (8) sur site réels, dans lequel les adresses d'appareils sur site peuvent être transmises par le système (2) d'ingénierie à l'outil (3) de planification d'installation et dans lequel l'outil de planification d'installation est constitué pour combiner au moins l'un des appareils (8) sur site à la au moins une unité (7) de simulation et pour associer l'adresse du au moins un appareil (8) sur site à la au moins une unité (7) de simulation.
